# EUROPEAN PATENT SPECIFICATION

(11) **EP 1 980 481 B1**
(45) Date of publication and mention of the grant of the patent: **20.01.2010**
(21) Application number: 07006564.4
(22) Date of filing: 29.03.2007
(51) Int. Cl.: B62K 25/28

(54) **Bicycle frame**
Fahrradrahmen
Cadre de bicyclette

(43) Date of publication of application: 15.10.2008
(73) Proprietor: MERIDA INDUSTRY CO., LTD., Meikang Village, Tatsun Hsiang, Changhua Hsien (TW)
(72) Inventor: Tseng, Ting-Huang, Changhua Hsien Taiwan (TW)
(74) Representative: Schildberg, Peter

(56) References cited:
- EP-A1- 1 273 508
- EP-A2- 0 493 773
- BE-A- 475 631
- DE-A1- 19 629 559
- DE-A1- 19 959 795
- DE-U1- 20 015 126
- US-A1- 2003 038 450
- US-A1- 2005 253 357
- US-A1- 2006 027 996
- US-B1- 6 206 397
- US-B1- 7 066 481

## Description

### 1. Field of the Invention

The present invention relates to a frame, and more particularly to a frame for a bicycle that has a shock absorbing device to provide a smooth operation.

### 2, Description of Related Art

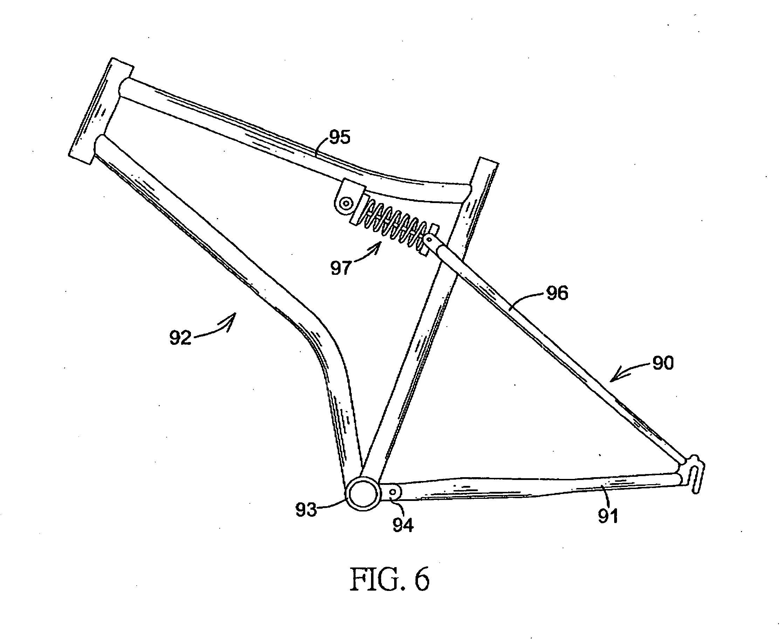

With reference to Fig. 6, a conventional bicycle frame with a shock absorbing capability has a front frame (92), a rear frame (90) and a shock absorber (97).

The front frame (92) has a seat tube, a top tube (95) and a bottom bracket shell (93). The seat tube has an upper end and a lower end. The top tube (95) is connected securely to the seat tube near the upper end and has a mounting bracket. The mounting bracket is formed down on the top tube (95) near the seat tube. The bottom bracket shell (93) is connected securely to the lower end of the seat tube and has a connecting bracket (94). The connecting bracket (94) is formed on the bottom bracket shell (93) below the seat tube.

The rear frame (90) is connected pivotally to the front frame (92) and has a lower fork (91) and an upper fork (96). The lower fork (91) is connected pivotally to the bottom bracket shell (93) of the front frame (92) and has a front end and a rear end. The front end of the lower fork (91) is connected to the connecting bracket (94) of the bottom bracket shell (93). Accordingly, the lower fork (91) can move pivotally relative to the bottom bracket shell (93). The upper fork (96) is connected securely to the lower fork (91) and has a lower end, an upper end and a mounting wing. The lower end of the upper fork (96) is connected securely to the rear end of the lower fork (91). The mounting wing is connected securely to the rear end of the lower fork (91). The mounting wing is connected to the upper end of the upper fork (96).

The shock absorber (97) is attached pivotally to the front frame (92) and the rear frame (90) between the top tube (95) and the upper fork (96) and has a connecting post and a spring. The connecting post is connected to the mounting bracket of the top tube (95) and the mounting wing of the upper fork (96). The spring is mounted around the connecting post to provide a shock absorbing capability between the front frame (92) and the rear frame (90).

BE 475 631A discloses a frame for a bicycle according to the preamble of claim 1.

However, the conventional bicycle frame has the following shortcomings.
1. The conventional bicycle frame can provide a shock absorbing capability, but the shock absorbing capability of the conventional bicycle frame is limited, and this cannot provide the conventional bicycle frame to fit with all kinds of the rugged and rough grounds.
2. The shock absorbing capability of the conventional bicycle frame isn't well enough to absorb the shock from the ground, and this will influence the safety and the comfortability of riding the bicycle.

To overcome the shortcomings, the present invention provides a bicycle frame to mitigate or obviate the aforementioned problems.

The main objective of the present invention is to provide a bicycle frame with a shock absorbing device that provides a smooth operation.

The bicycle frame in accordance with the present invention has a front frame, a mounting bracket assembly, a rear frame and a shock absorbing device. The front frame has a head tube, a down tube, a top tube, a bottom bracket shell and a seat tube. The seat tube is connected to bottom bracket shell, is connected to the rear end of the top tube and has an upper bracket seat, a connecting bracket and a lower bracket seat. The mounting bracket assembly is connected pivotally to the front frame and has two front mounting brackets and a rear mounting bracket. The rear frame is connected pivotally to the mounting bracket assembly and the front frame and has an upper fork, a lower fork and two dropouts. The shock absorbing device is connected to the front frame, the rear frame and the mounting bracket assembly and has a first shock absorber and a second shock absorber.

Other objectives, advantages and novel features of the invention will become more apparent from the following detailed description when taken in conjunction with the accompanying drawings.

### IN THE DRAWINGS:

Fig. 1 is a perspective view of a bicycle frame in accordance with the present invention;
Fig. 2 is an exploded perspective view of the bicycle in Fig. 1;
Fig. 3 is a side view of the bicycle frame in Fig. 1;
Fig. 4 is an operational side view of the bicycle frame in Fig, 1;
Fig. 5 is another operational side view of the bicycle frame in Fig. 1; and
Fig. 6 is a side view of a conventional bicycle frame in accordance with the prior art.

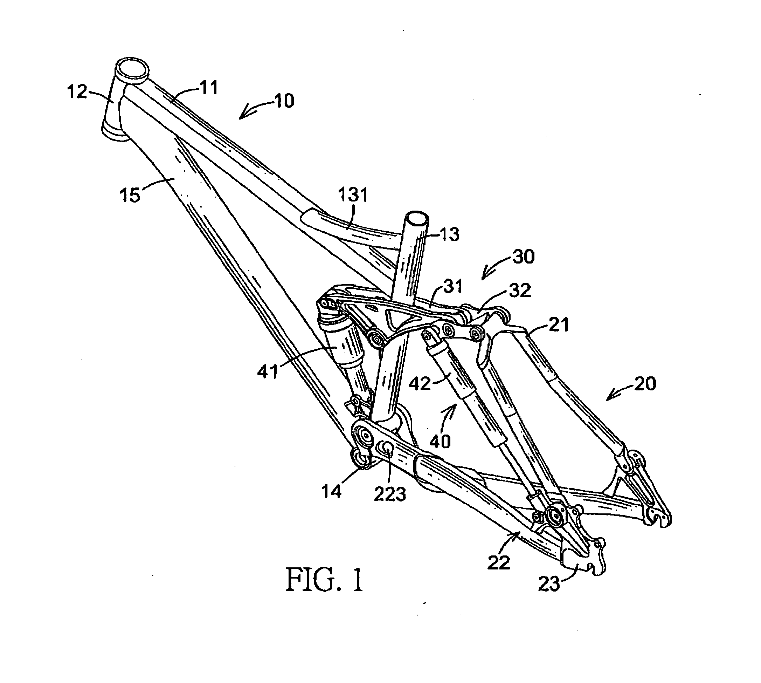

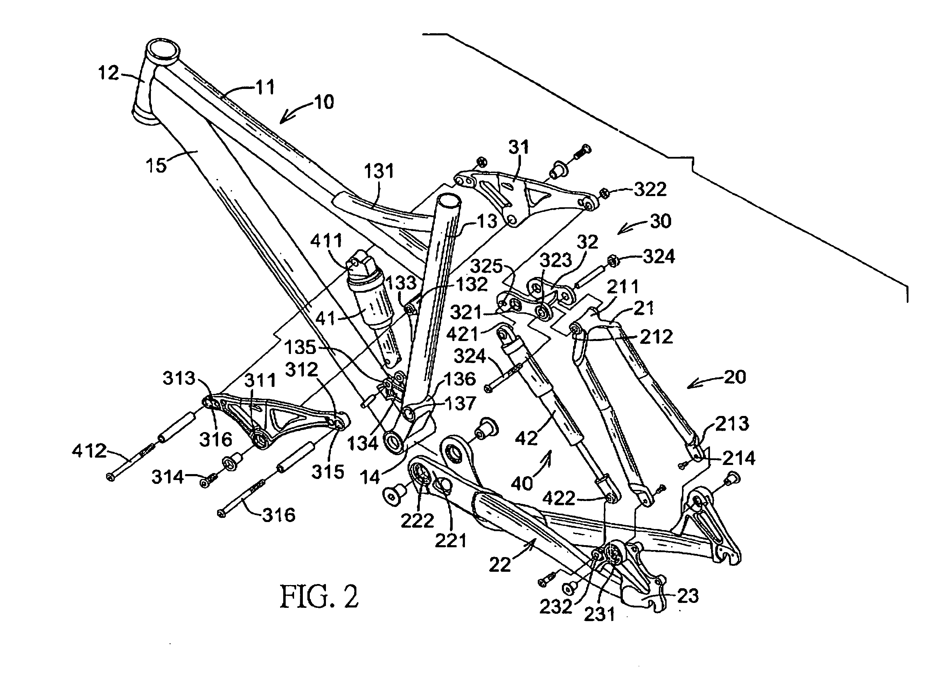

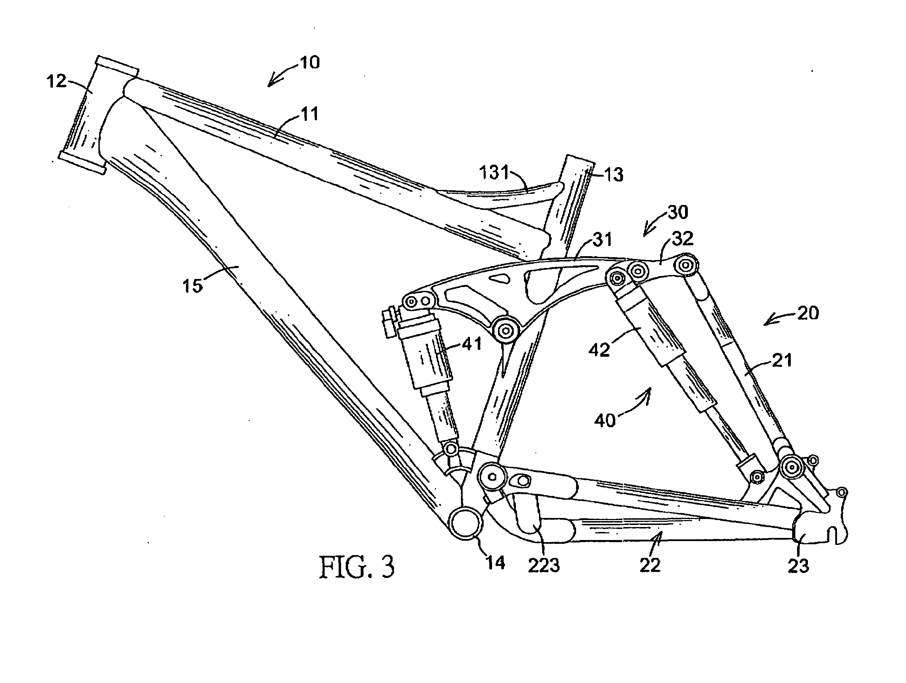

With reference to Figs. 1 to 3, a bicycle frame in accordance with the present invention comprises a front frame (10), a mounting bracket assembly (30), a rear frame (20) and a shock absorbing device (40).

The front frame (10) has a front, a rear, a head tube (12), a down tube (15), a top tube (11), a bottom bracket shell (14) and a seat tube (13).

The head tube (12) is formed at the front of the front frame (10).

The down tube (15) is connected to and protrudes at an angle down from the head tube (12) toward the rear of the front frame (10) and has a bottom end.

The top tube (11) is substantially horizontal, is connected to and protrudes substantially horizontally from the head tube (12) toward the rear of the front frame (10) and has a rear end.

The bottom bracket shell (14) is connected transversally to the bottom end of the down tube (15) and has a top.

The seat tube (13) is connected to and protrudes up from the bottom bracket shell (14), is connected to the rear end of the top tube (11) and has an upper end, a lower end, a connecting stay (131), an upper bracket seat (132), a connecting bracket (134) and a lower bracket seat (136). The connecting stay (131) is formed on and protrudes forward from the seat tube (13) near the upper end and is connected to the top tube (11). The upper bracket seat (132) is formed on and protrudes forward from the seat tube (13) and has two sides and an upper pivot hole (133). The upper pivot hole (133) is formed transversally through the sides of the upper bracket seat (132). The connecting bracket (134) is formed on the seat tube (13), is connected to the down tube (15) over the bottom bracket shell (14) and has two sides and two connecting holes (135). The connecting holes (135) are respectively formed through the sides of the connecting bracket (134) and align with each other. The lower bracket seat (136) is formed on and protrudes forward from the seat tube (13) between the connecting bracket (134) and the bottom bracket shell (14) and has two sides and a lower pivot hole (137). The lower pivot hole (137) is formed transversally through the sides of the lower bracket seat (136).

The mounting bracket assembly (30) is connected pivotally to the front frame (10) and has two front mounting brackets (31) and a rear mounting bracket (32).

The front mounting brackets (31) may be triangular and are connected pivotally to the seat tube (13), and each front mounting bracket (31) has a front end, a rear end, a through hole (311), a fastener (314), a rear arm (312), a connecting hole (315), a front arm (313) and multiple mounting hole (316).

The through holes (311) are respectively formed through the front mounting brackets (31) and are aligned with the upper pivot hole (133) of the upper bracket seat (132).

The fasteners (314) extend through the through holes (311) in the front mounting brackets (31) and the upper pivot hole (133) in the upper bracket seat (132) to connect the front mounting brackets (31) to the seat tube (13).

The rear arms (312) are formed respectively at the rear ends of the front mounting brackets (31).

The connecting holes (315) are respectively formed through the rear arms (312) of the front mounting brackets (31).

The front arms (313) are formed respectively at the front ends of the front mounting brackets (31).

The mounting holes (316) are formed respectively through the front arms (313) of the front mounting brackets (31).

The rear mounting bracket (32) may be H-shaped, is connected pivotally to the front mounting bracket (31) and has two linking arms and an engaging hole (325).

The linking arms are parallel to each other and are connected pivotally to the rear arms (312) and each linking arms has a front end, a rear end, a mounting hole (321), a first fastener (322), a connecting hole (323) and a second fastener (324).

The front ends of the linking arms are connected pivotally to the rear arms (312).

The mounting holes (321) are respectively formed through the front ends of the linking arms and are aligned with the connecting holes (315) of the front mounting brackets (31).

The first fasteners (322) extend through the connecting holes (315) in the front mounting brackets (31) and the mounting holes (321) in the rear mounting bracket (32) to connect the rear mounting bracket (32) with the front mounting brackets (31).

The connecting holes (323) are respectively formed through the rear ends of the linking arms.

The second fasteners (324) extend through the connecting holes (323) in the rear mounting bracket (32).

The engaging hole (325) is formed in one of the linking arms of the rear mounting bracket (32) in front of a corresponding mounting hole (321).

The rear frame (20) is connected pivotally to the mounting bracket assembly (30) and the front frame (10) and has an upper fork (21), a lower fork (22) and two dropouts (23).

The upper fork (21) is connected to the rear mounting bracket (32) and has a top end (211) and two bottom ends (213). The top end (211) is connected pivotally to the linking arms of the rear mounting bracket (32) and has two sides and a pivot hole (212). The pivot hole (212) is formed transversally through the sides of the top end (211) and is aligned with the connecting holes (323) in the rear mounting bracket (32). The second fasteners (324) of the linking arms respectively extend through the connecting holes (323) in the rear mounting bracket (32) and the pivotal hole (212) in the top end (211) to connect the upper fork (21) with the rear mounting bracket (32). The bottom ends (213) are parallel to each other, and each bottom end (213) has a through hole (214). The through holes (214) are respectively formed through the bottom ends (213) and align with each other.

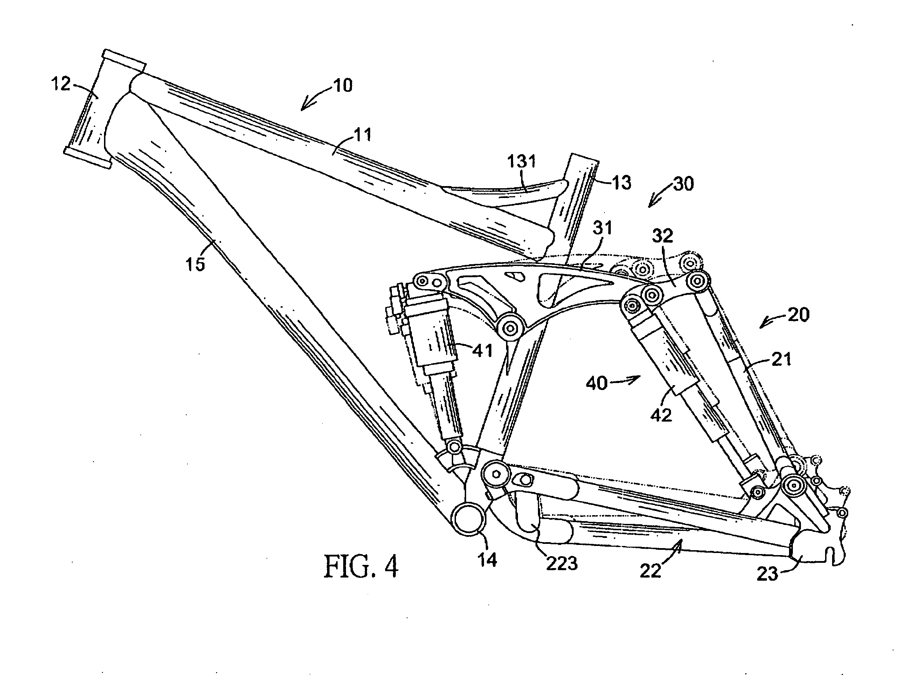

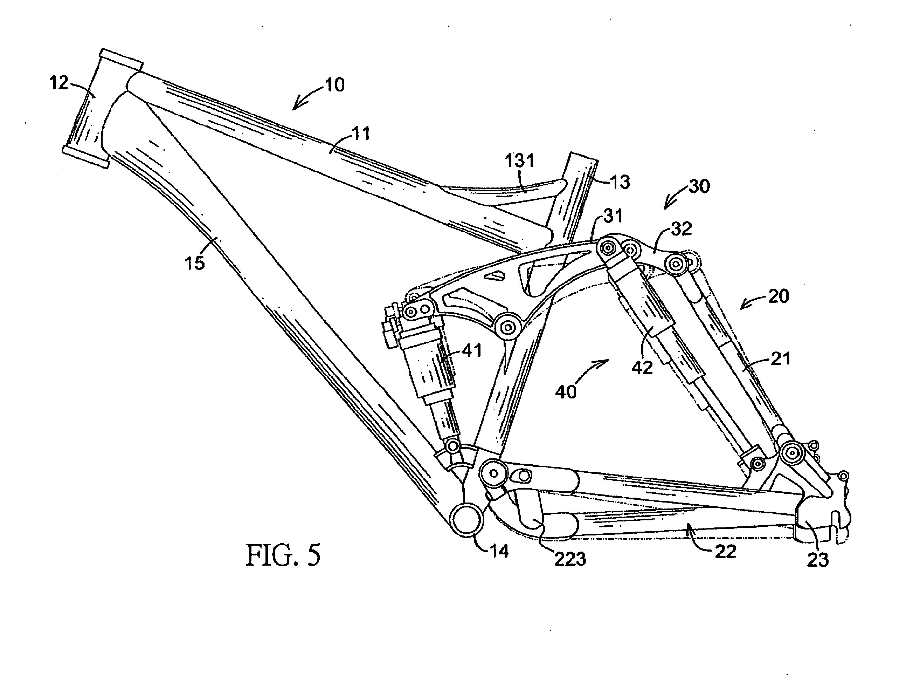

With further reference to Figs. 4 and 5, application of a shock to the rear frame (20) moves the upper fork (21) and pivots the rear mounting bracket (32) and the front mounting brackets (31) relative to the front frame (10).

The lower fork (22) is connected pivotally to the seat tube (13) and has two chainstays (221) and a cross member (223). The chainstays (221) are parallel to each other and are connected to the lower bracket seat (136) of the seat tube (13), and each chainstay (221) has a front end, a rear end and a pivot hole (222). The pivot holes (222) are formed through the front ends of the chainstays (221) and are aligned with the lower pivot hole (137) in the lower bracket seat (136). The cross member is connected between the front ends of the chainstays (221).

The dropouts (23) are respectively mounted on the rear ends of the chainstays (221) of the lower fork (22) and are connected pivotally to the bottom ends (213) of the upper fork (21), and each dropout (23) has a center hole (231). The center holes (231) are formed through the dropouts (23) and are aligned with the through holes (214) in the bottom ends (213) of the upper fork (21). One of the dropouts (23) has an attaching hole (232) formed in front of the center hole (231), the attaching hole (232) corresponds to the engaging hole (325) of the rear mounting bracket (32).

The shock absorbing device (40) is connected to the front frame (10), the rear frame (20) and mounting bracket assembly (30) and has a first shock absorber (41) and a second shock absorber (42).

The first shock absorber (41) is mounted pivotally between the connecting bracket (134) of the front frame (10) and the front mounting brackets (31) of the mounting bracket assembly (30) and has an upper end, a lower end, a mounting hole (411) and a fastener (412). The upper end of the first shock absorber (41) is attached to the rear arms (313) of the front mounting brackets (31). The mounting hole (411) is formed through the upper end of the first shock absorber (41) and is aligned with the mounting holes (316) of the front mounting brackets (31). The fastener (412) extends through the mounting hole (411) of the first shock absorber (41) and the corresponding mounting holes (316) in the front mounting brackets (31) to connect the first shock absorber (41) with the front mounting brackets (31). The lower end of the first shock absorber (41) is attached pivotally to the connecting holes (135) of the connecting bracket (134).

The second shock absorber (42) is mounted pivotally between the rear mounting bracket (32) of the mounting bracket assembly (30) and one of the dropouts (23) of the rear frame (20) and has an upper end, a lower end, an engaging post (421) and a connecting post (422). The upper end of the second shock absorber (42) is attached to a corresponding linking arm that has the engaging hole (325) of the rear mounting bracket (32). The engaging post (421) is formed on the upper end of the second shock absorber (42) and is engaged with the engaging hole (325) in the rear mounting bracket (32). The lower end of the second shock absorber (42) is attached pivotally to a corresponding dropout (23) that has the attaching hole (232). The connecting post (422) is formed on the lower end of the second shock absorber (42) and is connected to the attaching hole (232) in the corresponding dropout (23). With reference to Figs. 4 and 5, the shock absorbing device (40) is mounted pivotally between the front frame (10), the rear frame (20) and the mounting bracket assembly (30), a shock applied to the rear frame (20) causes the rear frame (20) to move up. With the movement of the rear frame (20), the rear mounting bracket (32) and the front mounting brackets (31) are pivoted and the shock absorbers (41, 42) are simultaneously compressed to absorb the shock.

The bicycle frame as described has the following advantages.
1. The bicycle frame with the shock absorbing device (40) can provide an excellent shock absorbing capability to fit with all kinds of the rugged and rough grounds with the first shock absorber (41) and the second shock absorber (42).
2. The bicycle frame with the shock absorbing device (40) can improve the shock absorbing capability of the bicycle frame, and this can make a rider riding the bicycle frame safely and comfortably.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A frame for a bicycle having
a front frame (10) having
a front;
a rear;
a head tube (12) being formed at the front of the front frame (10);
a down tube (15) being connected to and protruding at an angle down from the head tube (12) toward the rear of the front frame (10) and having a bottom end;
a top tube (11) being connected to and protruding from the head tube (12) toward the rear of the front frame (10) and having a rear end;
a bottom bracket shell (14) being connected transversally to the bottom end of the down tube (15) and having a top; and
a seat tube (13) being connected to and protruding up from the bottom bracket shell (14)and being connected to the rear end of the top tube (11) and having
an upper end;
a lower end;
an upper bracket seat (132) being formed on the seat tube (13);
a connecting bracket (134) being formed on the seat tube (13) and being connected to the down tube (15) over the bottom bracket shell (14); and
a lower bracket seat (136) being formed on the seat tube (13);
a mounting bracket assembly (30) being connected pivotally to the front frame (10) and having
two front mounting brackets (31) being connected pivotally to the upper bracket seat (132) of the seat tube (13); and
a rear frame (20) being connected pivotally to the mounting bracket assembly (30) and the front frame (10) and having
an upper fork (21) having
a top end (211) and
two bottom ends (213) being parallel to each other;
a lower fork (22) being connected pivotally to the seat tube (13) and having two chainstays (221) parallel to each other and being connected to the lower bracket seat (136) of the seat tube (13); and
two dropouts (23) being respectively mounted on the chainstays (221) of the lower fork (22)and being connected pivotally to the bottom ends (213) of the upper fork (21); and a shock absorbing device (40) being connected to the front frame (10), the rear frame (20) and mounting bracket assembly (30) and having a first shock absorber (41) being mounted pivotally between the connecting bracket (134) of the front frame (10) and the front mounting brackets (31) of the mounting bracket assembly (30); and
a second shock absorber (42), **characterised in that** the upper bracket seat (132) is protruding forward from the seat tube (13),
the lower bracket seat (136) is protruding backwards from the seat tube (13) near the connecting bracket (134) and the bottom bracket shell (14),
a rear mounting bracket (32) is connected pivotally to the front mounting bracket (31),
the top end (211) of the upper fork (21) is connected pivotally to the rear mounting bracket (32), and the second shock absorber (42) is mounted pivotally between the rear mounting bracket (32) of the mounting bracket assembly (30) and one of the dropouts (23) of the rear frame (20).

2. The bicycle frame as claimed in claim 1, wherein each front mounting bracket (31) has
a front end;
a rear end;
a through hole (311) being formed through the front mounting bracket (31) and being aligned with the upper pivot hole (133) of the upper bracket seat (132);
a rear arm (312) being formed respectively at the rear end of the front mounting bracket (31);
a front arm (313) being formed at the front end of the front mounting bracket (31); and multiple mounting hole (316).

3. The bicycle frame as claimed in claim 2, wherein
each front mounting bracket (31) has a connecting hole (315) being formed through the rear arms (312) of the front mounting brackets (31);
the rear mounting bracket (32) has two linking arms and each linking arm having a front end being connected pivotally to a corresponding rear arm (312);
a rear end;
a mounting hole (321) being formed through the front end of the linking arm and being aligned with the connecting hole (315) of a corresponding front mounting bracket (31);
a first fastener (322) being extended through the connecting hole (315) in the corresponding front mounting bracket (31) and the mounting hole (321) in the linking arm;
a connecting hole (323) being formed through the rear end of the linking arm; and
a second fastener (324) being extend through the connecting hole (323) in the linking arm; and the top end (211) has
two sides; and
a pivot hole (212) being formed transversally through the sides of the top end (211) and being aligned with the connecting holes (323) in the rear mounting bracket (32), and the second fasteners (324) of the linking arms respectively extend through the connecting holes (323) in the rear mounting bracket (32) and the pivotal hole (212) in the top end (211).

4. The bicycle frame as claimed in claim 3, wherein
the upper bracket seat (132) has
two sides; and
an upper pivot hole (133) being formed transversally through the sides of the upper bracket seat (132) and being aligned with the throughhole (311) of each front mounting bracket (31); and
each front mounting bracket (31) has a fastener (314) being extend through the through holes (311) in the front mounting brackets (31) and the upper pivot hole (133) in the upper bracket seat (132) to connect the front mounting brackets (31) to the seat tube (13).

5. The bicycle frame as claimed in claim 4, wherein
the lower bracket seat (136) is formed on and protrudes backwards from the seat tube (13) near the connecting bracket (134) and the bottom bracket shell (14) and has two sides; and
a lower pivot hole (137) being formed transversally through the sides of the lower bracket seat (136); and
each chainstay (221) of the lower fork (22) has a front end;
a rear end; and
a pivot hole (222) being formed through the front end of the chainstay (221) and being aligned with the lower pivot hole (137) in the lower bracket seat (136).

6. The bicycle frame as claimed in claim 5, wherein
the connecting bracket (134) has two sides; and
two connecting holes (135) being respectively formed through the sides of the connecting bracket (134) and aligning with each other;
each front mounting bracket (31) has multiple mounting holes (316) being formed through the front arm (313) of the front mounting bracket (31); and
the first shock absorber (41) has an upper end being attached to the rear arms (313) of the front mounting brackets (31);
a lower end being attached pivotally to the connecting holes (135) of the connecting bracket (134);
a mounting hole (411) being formed through the upper end of the first shock absorber (41) and being aligned with the corresponding mounting holes (316) of the front mounting brackets (31); and
a fastener (412) being extended through the mounting hole (411) of the first shock absorber (41) and a corresponding mounting holes (316) in the front mounting brackets (31) to connect the first shock absorber (41) with the front mounting brackets (31).

7. The bicycle frame as claimed in claim 6, wherein
each bottom end (213) of the upper fork (21) has a through hole (214) being formed through the bottom ends (213) and aligning with each other; and
each dropout (23) has a center hole (231) being formed through the dropout (23) and being aligned with the through hole (214) in a corresponding bottom end (213) of the upper fork (21).

8. The bicycle frame as claimed in claim 7, wherein
the rear mounting bracket (32) has an engaging hole (325) being formed in one of the linking arms of the rear mounting bracket (32) in front of a corresponding mounting hole (321);
one of the dropouts (23) has an attaching hole (232) being formed in front of the center hole (231) and the attaching hole (232) corresponding to the engaging hole (325) of the rear mounting bracket (32); and
the second shock absorber (42) has
an upper end being attached to a corresponding linking aim that has the engaging hole (325) of the rear mounting bracket (32);
a lower end being attached pivotally to a corresponding dropout (23) that has the attaching hole (232);
an engaging post (421) being formed on the upper end of the second shock absorber (42) and being engaged with the engaging hole (325) in the rear mounting bracket (32); and
a connecting post (422) being formed on the lower end of the second shock absorber (42) and being connected to the attaching hole (232) in the corresponding dropout (23).

9. The bicycle frame as claimed in claim 8, wherein the lower fork (22) has a cross member (223) being connected between the front ends of the chainstays (221).

10. The bicycle frame as claimed in claim 9, wherein the seat tube (13) has a connecting stay (131) formed on and protruding forward from the seat tube (13) near the upper end and connected to the top tube (11) and the front mounting brackets (31) are triangular.

## Patentansprüche

1. Rahmen für ein Fahrrad, mit
einem vorderen Rahmen (10) mit
einer Vorderseite;
einer hinteren Seite;
einem Steuerrohr (12), ausgebildet an der Vorderseite des vorderen Rahmens (10);
einem Unterrohr (15), das mit dem Steuerrohr (12) verbunden ist und in einem Winkel zu dem Steuerrohr (12) nach unten zu der hinteren Seite des vorderen Rahmens (10) hin hervorragt und ein unteres Ende aufweist;
einem Oberrohr (11), das mit dem Steuerrohr (12) verbunden ist und von dem Steuerrohr (12) zu der hinteren Seite des vorderen Rahmens (10) hin vorspringt und ein hinteres Ende aufweist;
einem Tretlagergehäuse (14), das in Querrichtung mit dem unteren Ende des Unterrohrs (15) verbunden ist und eine Oberseite hat; und
einem Sattelrohr (13), das mit dem Tretlager (14) verbunden ist und nach oben vorspringt und mit dem hinteren Ende des Oberrohrs (11) verbunden ist und aufweist
ein oberes Ende;
ein unteres Ende;
einen oberen Bügelsitz (132), ausgebildet an dem Sattelrohr (13);
einen Verbindungsbügel (134), ausgebildet an dem Sattelrohr (13) und über dem Tretlagergehäuse (14) mit dem Unterrohr (15) verbunden; und
einen unteren Bügelsitz (136), ausgebildet an dem Sattelrohr (13);
eine Montagebügel-Baugruppe (30), die schwenkbar mit dem vorderen Rahmen (10) verbunden ist und aufweist
zwei vordere Montagebügel (31), die schwenkbar mit dem oberen Bügelsitz (132) des Sattelrohrs (13) verbunden sind; und
einem hinteren Rahmen (20), der schwenkbar mit der Montagebügel-Baugruppe (30) und dem vorderen Rahmen (10) verbunden ist und der aufweist
eine obere Gabel (21) mit
einem oberen Ende (211) und
zwei zueinander parallelen unteren Enden (213);
eine untere Gabel (22), die schwenkbar mit dem Sattelrohr (13) verbunden ist und zwei Kettenstreben (221) aufweist, die parallel zueinander und mit dem unteren Bügelsitz (136) des Sattelrohrs (13) verbunden sind; und
zwei Ausfallenden (23), die jeweils an den Kettenstreben (221) der unteren Gabel (22) montiert und schwenkbar mit den unteren Enden (213) der oberen Gabel (21) verbunden sind; und
eine Stoßdämpf-Einrichtung (40), die mit dem vorderen Rahmen (10), dem hinteren Rahmen (20) und der Montagebügel-Baugruppe (30) verbunden ist und die aufweist
einen ersten Stoßdämpfer (41), der schwenkbar zwischen dem Verbindungsbügel (134) des vorderen Rahmens (10) und den vorderen Montagebügeln (31) der Montagebügel-Baugruppe (30) gelagert ist; und
einen zweiten Stoßdämpfer (42), **dadurch gekennzeichnet, dass** der obere Bügelsitz (132) nach vorne von dem Sattelrohr (13) hervorragt,
der untere Bügelsitz (136) in der Nähe des Verbindungsbügels (134) und des Tretlagers (14) von dem Sattelrohr (13) nach hinten hervorragt,
ein hinterer Montagebügel (32) schwenkbar mit dem vorderen Montagebügel (31) verbunden ist,
das obere Ende (211) der oberen Gabel (21) schwenkbar mit dem hinteren Montagebügel (32) verbunden ist und der zweite Stoßdämpfer (42) schwenkbar zwischen dem hinteren Montagebügel (32) der Montagebügel-Baugruppe (30) und einem der Ausfallenden (23) des hinteren Rahmens (20) gelagert ist.

2. Fahrradrahmen gemäß Anspruch 1, wobei jeder vordere Montagebügel (31) aufweist
ein vorderes Ende;
ein hinteres Ende;
ein Durchloch (311), das durch den vorderen Montagebügel (31) hindurch ausgebildet ist und mit dem oberen Schwenkloch (133) des oberen Bügelsitzes (132) fluchtet;
einen hinteren Arm (312), der jeweils an dem hinteren Ende des vorderen Montagebügels (31) ausgebildet ist;
einen vorderen Arm (313), der an dem vorderen Ende des vorderen Montagebügels (31) ausgebildet ist; und
ein Mehrfach-Montageloch (316).

3. Fahrradrahmen gemäß Anspruch 2, wobei
jeder vordere Montagebügel (31) ein durch die hinteren Arme (312) der vorderen Montagebügel (31) hindurch ausgebildetes Verbindungsloch (315) aufweist;
der hintere Montagebügel (32) zwei Verbindungsarme hat und jeder Verbindungsarm aufweist ein vorderes Ende, das schwenkbar mit einem entsprechenden hinteren Arm (312) verbunden ist;
ein hinteres Ende;
ein Montageloch (321), das durch das vordere Ende des Verbindungsarms hindurch ausgebildet ist und mit dem Verbindungsloch (315) eines entsprechenden vorderen Montagebügels (31) fluchtet;
ein erstes Befestigungselement (322), das sich durch das Verbindungsloch (315) in dem entsprechenden vorderen Montagebügel (31) und das Montageloch (321) in dem Verbindungsarm hindurch erstreckt;
ein Verbindungsloch (323), ausgebildet durch das hintere Ende des Verbindungsarmes; und
ein zweites Befestigungselement (324), das sich durch das Verbindungsloch (323) in dem Verbindungsarm hindurch erstreckt;
und das obere Ende (211) aufweist
zwei Seiten; und
ein Schwenkloch (212), das quer durch die Seiten des oberen Endes (211) hindurch ausgebildet ist und mit den Verbindungslöchern (323) in dem hinteren Montagebügel (32) fluchtet, und die zweiten Befestigungselemente (324) der Verbindungsarme sich jeweils durch die Verbindungslöcher (323) in dem hinteren Montagebügel (32) und das Schwenkloch (212) in dem oberen Ende (211) hindurch erstrecken.

4. Fahrradrahmen gemäß Anspruch 3, wobei
der obere Bügelsitz (132) aufweist
zwei Seiten; und
ein oberes Schwenkloch (133), das quer durch die Seiten des oberen Bügelsitzes (132) hindurch ausgebildet ist und mit dem Durchloch (311) von jedem vorderen Montagebügel (31) fluchtet; und
jeder vordere Montagebügel (31) ein Befestigungselement (314) aufweist, das sich durch die Durchlöcher (311) in den vorderen Montagebügeln (31) und das obere Schwenkloch (133) in dem oberen Bügelsitz (132) hindurch erstreckt, um die vorderen Montagebügel (31) mit dem Sattelrohr (13) zu verbinden.

5. Fahrradrahmen gemäß Anspruch 4, wobei
der untere Bügelsitz (136) an dem Sattelrohr (13) ausgebildet ist und in der Nähe des Verbindungsbügels (134) und des Tretlagers (14) von diesem nach hinten hervorragt und aufweist
zwei Seiten; und
ein unteres Schwenkloch (137), das quer durch die Seiten des unteren Bügelsitzes (136) hindurch ausgebildet ist; und
jede Kettenstrebe (221) der unteren Gabel (22) aufweist
ein vorderes Ende;
ein hinteres Ende; und
ein Schwenkloch (222), das durch das vordere Ende der Kettenstrebe (221) hindurch ausgebildet ist und mit dem unteren Schwenkloch (137) in dem unteren Bügelsitz (136) fluchtet.

6. Fahrradrahmen gemäß Anspruch 5, wobei
der Verbindungsbügel (134) aufweist
zwei Seiten; und
zwei Verbindungslöcher (135), die jeweils durch die Seiten des Verbindungsbügels (134) hindurch ausgebildet sind und miteinander fluchten;
jeder vordere Montagebügel (31) mehrere durch den vorderen Arm (313) des vorderen Montagebügels (31) hindurch ausgebildete Mehrfach-Montagelöcher (316) aufweist; und
der erste Stoßdämpfer (41) aufweist
ein oberes Ende, das an den hinteren Armen (313) der vorderen Montagebügel (31) angebracht ist;
ein unteres Ende, das schwenkbar an den Verbindungslöchern (135) des Verbindungsbügels (134) angebracht ist;
ein Montageloch (411) das durch das obere Ende des ersten Stoßdämpfers (41) hindurch ausgebildet ist und mit den entsprechenden Montagelöchern (316) der vorderen Montagebügel (31) fluchtet; und
ein Befestigungselement (412), das sich durch das Montageloch (411) des ersten Stoßdämpfers (41) und entsprechende Montagelöcher (316) in den vorderen Montagebügeln (31) hindurch erstreckt, um den ersten Stoßdämpfer (41) mit den vorderen Montagebügeln (31) zu verbinden.

7. Fahrradrahmen gemäß Anspruch 6, wobei
jedes untere Ende (213) der oberen Gabel (21) ein Durchloch (214) aufweist, das durch die unteren Enden (213) hindurch ausgeführt ist und mit dem anderen fluchtet; und
jedes Ausfallende (23) ein Zentrumsloch (231) aufweist, das durch das Ausfallende (23) hindurch ausgebildet ist und mit dem Durchloch (214) in einem entsprechenden unteren Ende (213) der oberen Gabel (21) fluchtet.

8. Fahrradrahmen gemäß Anspruch 7, wobei
der hintere Montagebügel (32) ein Eingriffsloch (325) aufweist, das in einem der Verbindungsarme des hinteren Montagebügels (32) gegenüber einem entsprechenden Montageloch (321) ausgebildet ist;
eines der Ausfallenden (23) ein Anbringungsloch (232) aufweist, das gegenüber dem Zentrumsloch (231) und dem Anbringungsloch (232) entsprechend dem Eingriffsloch (325) des hinteren Montagebügels (32) ausgebildet ist; und
der zweite Stoßdämpfer (42) aufweist
ein oberes Ende, das an einem entsprechenden Verbindungsarm angebracht ist, welcher das Eingriffsloch (325) des hinteren Montagebügels (32) aufweist;
ein unteres Ende, das schwenkbar an einem entsprechenden Ausfallende (23) angebracht ist, welches das Anbringungsloch (232) aufweist;
einen Eingriffblock (421), der an dem oberen Ende des zweiten Stoßdämpfers (42) ausgebildet ist und mit dem Eingriffsloch (325) in dem hinteren Montagebügel (32) in Eingriff ist; und
einen Verbindungsblock (422), der an dem unteren Ende des zweiten Stoßdämpfers (42) ausgebildet ist und mit dem Anbringungsloch (232) in dem entsprechenden Ausfallende (23) verbunden ist.

9. Fahrradrahmen gemäß Anspruch 8, wobei die untere Gabel (22) ein Querelement (223) aufweist, das zwischen den vorderen Enden der Kettenstreben (221) eingeschaltet ist.

10. Fahrradrahmen gemäß Anspruch 9, wobei das Sattelrohr (13) eine Verbindungsstrebe (131) aufweist, die in der Nähe des oberen Endes an dem Sattelrohr (13) ausgebildet ist und von diesem nach vorne hervorragt und mit dem Oberrohr (11) verbunden ist, und die vorderen Montagebügel (31) dreieckig sind.

## Revendications

1. Cadre pour une bicyclette, avec
un cadre avant (10) ayant
un côté avant;
un côté arrière;
un tube de direction (12), formé au côté avant du cadre avant (10);
un tube inférieur (15), étant connecté au tube de direction (12) et faisant saillie au dessous vers le côté arrière du cadre avant (10) en un angle du tube de direction (12) et ayant une extrémité de fond;
un tube supérieur (11), étant connecté au tube de direction (12) et faisant saillie du tube de direction (12) vers le côté arrière du cadre avant (10) et ayant une extrémité arrière;
un boîtier de pédalier (14), qui est connecté transversalement à extrémité inférieure du tube inférieur (15) et qui a un côté supérieur; et
un tube de selle (13), qui est connecté au boîtier de pédalier (14) et projette vers le haut à partir de cela et qui est connecté à l'extrémité arrière du tube supérieur (11) et qui présente
une extrémité supérieure;
une extrémité inférieure;
un support d'arceau (132) supérieur, formé dans le tube de selle (13);
un arceau de connexion (134), formé dans le tube de selle (13) et connecté au tube inférieur (15) au-dessus du boîtier de pédalier (14); et
un support d'arceau (136) inférieur, formé dans le tube de selle (13);
un ensemble d'arceaux de montage (30), étant connecté de façon pivotante au cadre avant (10) et qui présente
deux arceaux de montage avant (31), étant connecté de façon pivotante au support d'arceau supérieur (132) du tube de selle (13); et
un cadre arrière (20), étant connecté de façon pivotante à l'ensemble d'arceaux de montage (30) et au cadre avant (10) et qui présente
une fourche supérieure (21) avec
une extrémité supérieure (211) et
deux extrémités inférieures (213) parallèles l'une à l'autre;
une fourche inférieure (22), qui est connectée de façon pivotante au tube de selle (13) et qui présente deux bases arrière (221), qui sont parallèles l'une à l'autre et connectées au support d'arceau (136) inférieur du tube de selle (13); et
deux parties coulissantes (23), qui sont respectivement montées dans les bases arrière (221) de la fourche inférieure (22) et connectées de façon pivotante aux extrémités inférieures (213) de la fourche supérieure (21); et
un dispositif d'amortissement (40), qui est connecté au cadre avant (10), au cadre arrière (20) et à l'ensemble d'arceaux de montage (30) et qui présente
un premier amortisseur (41), qui est logé de façon pivotante entre l'arceau de connexion (134) du cadre avant (10) et les arceaux de montage avant (31) de l'ensemble d'arceaux de montage (30); et
un deuxième amortisseur (42), **caractérisé en ce que** le support d'arceau supérieur (132) est en saillie vers l'avant à partir du tube de selle (13),
le support d'arceau inférieur (136) est en saillie vers l'arrière à partir du tube de selle (13) dans la proximité de l'arceau de connexion (134) et du boîtier de pédalier (14),
un arceau de montage arrière (32) est connecté de façon pivotante à l'arceau de montage avant (31),
extrémité supérieure (211) de la fourche supérieure (21) est connectée de façon pivotante à l'arceau de montage arrière (32), et le deuxième amortisseur (42) est logé de façon pivotante entre l'arceau de montage arrière (32) de l'ensemble d'arceaux de montage (30) et une des parties coulissantes (23) du cadre arrière (20).

2. Cadre de bicyclette selon la revendication 1, chaque arceau de montage avant (31) présentant
une extrémité avant;
une extrémité arrière;
un trou perçant (311), qui est formé à travers de l'arceau de montage avant (31) et qui s'aligne au trou de pivotement supérieur (133) du support d'arceau supérieur (132);
un bras arrière (312), qui est respectivement formé dans extrémité arrière de l'arceau de montage avant (31);
un bras avant (313), qui est respectivement formé dans l'extrémité avant de l'arceau de montage avant (31); et
un trou de montage multiple (316).

3. Cadre de bicyclette selon la revendication 2, dans lequel
chaque arceau de montage (31) avant présente un trou de connexion (315) formé à travers les bras arrière (312) de l'arceau de montage avant (31);
l'arceau de montage arrière (32) a deux bras de connexion et chaque bras de connexion présente une extrémité avant, qui est connectée de façon pivotante à un bras arrière (312) correspondant (312);
une extrémité arrière;
un trou de montage, (321), qui est formé à travers extrémité arrière du bras de connexion et qui s'aligne au trou de connexion (315) d'un arceau de montage avant (31);
un premier élément de rattache (322), qui s'étend à travers du trou de connexion (315) dans l'arceau de montage avant (31) correspondant et du trou de montage (321) dans le bras de connexion;
un trou de connexion (323), formé à travers l'extrémité arrière du bras de connexion; et
un deuxième élément de rattache (324), qui s'étend à travers du trou de connexion (323) dans le bras de connexion;
et l'extrémité supérieure (211) a
deux côtés; et
un trou de pivotement (212), qui est formé transversalement à travers les côtés de l'extrémité supérieure (211) et qui s'aligne aux trous de connexion (323) dans l'arceau de montage arrière (32), et les deuxièmes éléments de rattache (324) des bras de connexion s'étendent respectivement à travers les trous de connexion (323) dans l'arceau de montage arrière (32) et le trou de pivotement (212) dans l'extrémité (211) supérieure.

4. Cadre de bicyclette selon la revendication 3, dans lequel
le support d'arceau supérieur (132) présente
deux côtés; et
un trou de pivotement supérieur (133), qui est formé transversalement à travers les côtés du support d'arceau supérieur (132) et qui s'aligne au trou perçant (311) de chaque arceau de montage avant (31); et
chaque arceau de montage avant (31) présente un élément de rattache (314), qui s'étend à travers les trous perçants (311) dans l'arceau de montage avant (3 1 ) et le trou de pivotement supérieur (133) dans le support d'arceau supérieur (132), pour connecter les arceaux de montage avant (31) au tube de selle (13).

5. Cadre de bicyclette selon la revendication 4, dans lequel
le support d'arceau (136) inférieur est formé dans le tube de selle (13) dans la proximité de l'arceau de connexion (134) et du boîtier de pédaliers (14) et projette vers l'arrière à partir du tube de selle (13) et présente
deux côtés; et
un trou de pivotement inférieur (137), qui est formé transversalement à travers les côtés du support d'arceau inférieur (135) ; et
chaque base arrière (221) de la fourche inférieure (22) présente
une extrémité avant;
une extrémité arrière; et
un trou de pivotement (222), qui est formé à travers l'extrémité avant de la base arrière (221) et qui s'aligne au trou de pivotement inférieur (137) dans le support d'arceau inférieur (136).

6. Cadre de bicyclette selon la revendication 5, dans lequel
l'arceau de connexion (134) présente
deux côtés; et
deux trous de connexion (135), qui sont respectivement formés à travers les côtés de l'arceau de connexion (134) et qui s'alignent l'un à l'autre;
chaque arceau de montage avant (31) présente trous de montage multiples (316) qui sont formés à travers le bras avant (313) de l'arceau de montage avant (31); et
le premier amortisseur (41) présente
une extrémité supérieure, qui est attachée dans les bras arrière (313) des arceaux de montage avant (31);
une extrémité inférieure, qui est attachée de façon pivotante dans les trous de connexion (135) de l'arceau de connexion (134);
un trou de montage (411) qui est formé à travers l'extrémité supérieure du premier amortisseur (41) et qui s'aligne aux trous de montage correspondants (316) de l'arceau de montage avant (31); et
un élément de rattache (412), qui s'étend à travers le trou de montage (411) du premier amortisseur (41) et les trous de montage (316) correspondants dans les arceaux de montage avant (31), pour connecter le premier amortisseur (41) aux arceaux de montage avant (31).

7. Cadre de bicyclette selon la revendication 6, dans lequel
chaque extrémité de fond (213) de la fourche supérieure (21) présente un trou perçant (214), qui est formé à travers les extrémités inférieures (213) et qui s'aligne à l'autre; et
chaque partie coulissante (23) présente un trou de centre (231), qui est formé à travers la partie coulissante (23) et qui s'aligne au trou perçant (214) dans une extrémité inférieure (213) correspondante de la fourche supérieure (21).

8. Cadre de bicyclette selon la revendication 7, dans lequel
l'arceau de montage arrière (32) présente un trou d'engagement (325), qui est formé dans un des bras de connexion de l'arceau de montage arrière (32) vis-à-vis d'un trou de montage (321) correspondant;
une des parties coulissantes (23) présente un trou d'attachement (232), qui est formé vis-à-vis du trou de centre (231) et du trou d'attachement (232) correspondant au trou d'engagement (325) de l'arceau de montage arrière (32); et
le deuxième amortisseur (42) présente
une extrémité supérieure, qui est attachée à un bras de connexion correspondant qui présente le trou d'engagement (325) de l'arceau de montage arrière (32);
une extrémité inférieure, qui est attachée de façon pivotante dans une partie coulissante correspondante (23) qui a le trou d'attachement (232);
un bloc d'engagement (421), qui est formé dans l'extrémité supérieure du deuxième amortisseur (42) et qui s'engage au trou d'engagement (325) dans l'arceau de montage arrière (32); et
un bloc de connexion (422), qui est formé dans l'extrémité inférieure du deuxième amortisseur (42) et qui est connecté au trou d'attachement (232) dans la partie coulissante correspondante (23).

9. Cadre de bicyclette selon la revendication 8, dans lequel la fourche inférieure (22) présente un élément transversal (223), qui est connecté entre les extrémités avant des bases arrière (221).

10. Cadre de bicyclette selon la revendication 9, dans lequel le tube de selle (13) présente un bras de connexion (131), qui est formé dans la proximité de l'extrémité supérieure dans le tube de selle (13) et fait saillie en avant à partir de celui-ci et est connecté au tube supérieur (11), et les arceaux de montage (31) sont triangulaires.
